# EUROPEAN PATENT APPLICATION

(11) **EP 1 146 462 A1**
(43) Date of publication of application: **17.10.2001**
(21) Application number: 01302673.7
(22) Date of filing: 22.03.2001
(51) Int. Cl.: G06F 17/60

(54) **Method and system for processing a customer concern**

(30) Priority: 12.04.2000 US 547650; 12.04.2000 US 547661
(71) Applicant: FORD MOTOR COMPANY, Dearborn, MI 48121 (US)
(72) Inventor: Rowse, William T., Belford, NJ 07718 (US); Inman, Barry M., Taylor, Michigan 48180 (US); Mayberry, Debra L., Ypsilanti, 48198 (US); Park, David G., Livonia, Michigan 48154 (US); Ubik, Henry T., Grosse Pointe, Michigan 48230 (US); Mashni, Paul W., Plymouth, Michigan 48170 (US); Jackson, Robert P., Westland, Michigan 48186 (US)
(74) Representative: Messulam, Alec Moses

(57) **Abstract**

A method for evaluating a customer concern is disclosed. The method includes receiving the concern related to a subject matter from a customer, capturing at least one digital image of the subject matter of the concern, and deciding whether to approve a corrective action for the customer concern based on a review of the at least one digital image. The present invention provides real time review and response to a customer concern. Thus, customer satisfaction is increased and costs for processing customer concerns are reduced.

## Description

The present invention relates to methods and systems for processing a customer concern wherein the processing is conducted in real time while the customer waits, and a transaction record is retained and distributed throughout the automotive value chain for quality improvement actions.

Many companies today communicate with a distributed network of sales offices, distribution sites, suppliers, servicing offices and customers. This distributed arrangement is necessary to provide the company's customers with its products and services. However, significant problems are created by this arrangement. Two of the most significant problems are equitable warranty administration (including "delivery" of warranty work to customers and the control of franchisees administering warranty) and obtaining accurate and reliable data on physical attributes of components that determine warranty costs and customer satisfaction.

Relating to equitable warranty administration and control, in the automotive industry context, an automobile manufacturer generally has a headquarters where policy decisions regarding its products are made. However, the sales of the automobile company's products are conducted at a distributed network of franchised automobile dealers. The automobile dealers sell the automobile company's products to customers and subsequently provide warranty service (for the warranty coverage period) for these products to customers. In recent years automobile manufacturers have increased warranty coverage for their products, leading to an increase in warranty claims. Because automobile dealers are empowered to define customer concerns as warranty, and correspondingly conduct repairs that are then reimbursed, automobile companies face the problem of ensuring that warranty policies established centrally are administered equitably by all dealers.

Customers who purchase a vehicle should receive consistent warranty application, regardless of the market where the vehicle is purchased or serviced. An additional complexity is added when automobile companies determine that it is necessary to "pre-approve" various components as part of the warranty administration process instead of automatically reimbursing dealers for completed repairs. Examples of the need for pre-approval include (but are not limited to) controlling specific franchisees to prevent inappropriate claims for causes that are not manufacturer's defects, obtaining diagnostic information for analytical purposes prior to payment, and assisting dealers in identifying the correct repair practices (ensuring a robust and effective repair in a responsible manner from a cost standpoint.)

Consequently, the prior art system of processing warranty claims has become overloaded and ineffective in servicing the company's customers. Automobile dealers and automobile customers have become frustrated and dissatisfied with the prior art system and process in place currently to handle warranty claims.

The prior art system and method for processing a warranty claim does not provide a dealer and customer with the capability of resolving a warranty claim in real time when automobile pre-approval requirements converge with warranty administration with the customer. Typically, the prior art system requires a customer to enter a dealership, and communicate a concern regarding the automobile to a dealership employee. The dealership employee then makes a determination as to whether the issue raised by the customer relates to a manufacturing defect. In an uncontrolled environment, this decision could be made not according to the manufacturer's policy, and thus inappropriately claimed by the dealer. In some cases the customer may be pressuring the dealer to complete an inappropriate repair. If the dealership employee determines that a manufacturing defect exists then information is entered into a computer, which is in communication with the automobile company, to request payment for labor and parts to correct the manufacturing defect.

The prior art system compromises either the pre-approval control process or satisfying the customer. Control procedures would call for a part in question to be packaged, shipped and reexamined later by the manufacturer. If analysis indicated an inappropriate repair was performed, a subsequent charge back process would be implemented, which was labor intensive and substantially less efficient than an avoided claim initially. Alternative to this returned parts control, the cost of a no-control process, while quick for customers, provided substantial leverage for dealers to make inappropriate repairs and administer warranty inconsistently. The dealership must then return the defective part to the automobile manufacturer to obtain the required funds to correct the customer's concern. This process takes considerable time to obtain the needed approvals from the automobile company, and is very cumbersome as it requires a review of actual vehicle parts which are difficult to handle. Consequently, approvals are made for customer concerns which are not actually manufacturing defects.

The second major problem referred to above is quality process improvement. Because product quality is one of the key competitive issues in the automobile industry, it is critical to know the durability attributes of all components while in use by customers. With major companies having millions of customers with current warranty coverage, and with the impossibility of laboratory modeling of all product use attributes, the prior art methods and systems for handling and tracking warranty returns do not provide real time feed back from dealers and customers regarding defective parts. Defect data typically takes months to identify (and requires "data mining" from transaction records).

Thus, what is needed is a new and improved system and method for handling customer concerns and warranty returns which is capable of resolving these problems in real-time. Furthermore, the new and improved system and method must allow defect data (or revised component specification studies/projects) to be instantly available for all participants in the automotive value chain including design, quality and product engineers, assembly plants, carriers, and suppliers in dispersed locations.

Many companies today communicate with a distributed network of sales offices, distribution sites, suppliers, servicing offices and. customers. This distributed arrangement is necessary to provide the company's customers with its products and services. However, significant problems are created by this arrangement. Two of the most significant problems are equitable warranty administration (including "delivery" of warranty work to customers and the control of franchisees administering warranty) and obtaining accurate and reliable data on physical attributes of components that determine warranty costs and customer satisfaction.

Relating to equitable warranty administration and control, in the automotive industry context, an automobile manufacturer generally has a headquarters where policy decisions regarding its products are made. However, the sales of the automobile company's products are conducted at a distributed network of franchised automobile dealers. The automobile dealers sell the automobile company's products to customers and subsequently provide warranty service (for the warranty coverage period) for these products to customers. In recent years automobile manufacturers have increased warranty coverage for their products, leading to an increase in warranty claims. Because automobile dealers are empowered to define customer concerns as warranty, and correspondingly conduct repairs that are then reimbursed, automobile companies face the problem of ensuring that warranty policies established centrally are administered equitably by all dealers. Customers who purchase a vehicle should receive consistent warranty application, regardless of the market where the vehicle is purchased or serviced. An additional complexity is added when automobile companies determine that it is necessary to "pre-approve" various components as part of the warranty administration process instead of automatically reimbursing dealers for completed repairs. Examples of the need for pre-approval include (but are not limited to) controlling specific franchisees to prevent inappropriate claims for causes that are not manufacturer's defects, obtaining diagnostic information for analytical purposes prior to payment, and assisting dealers in identifying the correct repair practices (ensuring a robust and effective repair in a responsible manner from a cost standpoint.)

Consequently, the prior art system of processing warranty claims has become overloaded and ineffective in servicing the company's customers. Automobile dealers and automobile customers have become frustrated and dissatisfied with the prior art system and process in place currently to handle warranty claims.

The prior art system and method for processing a warranty claim does not provide a dealer and customer with the capability of resolving a warranty claim in real time when automobile pre-approval requirements converge with warranty administration with the customer. Typically, the prior art system requires a customer to enter a dealership, and communicate a concern regarding the automobile to a dealership employee. The dealership employee then makes a determination as to whether the issue raised by the customer relates to a manufacturing defect. In an uncontrolled environment, this decision could be made not according to the manufacturer's policy, and thus inappropriately claimed by the dealer. In some cases, the customer may be pressuring the dealer to complete an inappropriate repair. If the dealership employee determines that a manufacturing defect exists, then information is entered into a computer, which is in communication with the automobile company, to request payment for labor and parts to correct the manufacturing defect.

The prior art system compromises either the pre-approval control process or satisfying the customer. Control procedures would call for a part in question to be packaged, shipped and reexamined later by the manufacturer. If analysis indicated an inappropriate repair was performed, a subsequent charge back process would be implemented, which was labor intensive and substantially less efficient than an avoided claim initially. Alternative to this returned parts control, the cost of a no-control process, while quick for customers, provided substantial leverage for dealers to make inappropriate repairs and administer warranty inconsistently. The dealership must then return the defective part to the automobile manufacturer to obtain the required funds to correct the customer's concern. This process takes considerable time to obtain the needed approvals from the automobile company, and is very cumbersome as it requires a review of actual vehicle parts which are difficult to handle. Consequently, approvals are made for customer concerns which are not actually manufacturing defects.

The second major problem referred to above is quality process improvement. Because product quality is one of the key competitive issues in the automobile industry, it is critical to know the durability attributes of all components while in use by customers. With major companies having millions of customers with current warranty coverage, and with the impossibility of laboratory modeling of all product use attributes, the prior art methods and systems for handling and tracking warranty returns do not provide real time feed back from dealers and customers regarding defective parts. Defect data typically takes months to identify (and requires "data mining" from transaction records).

Thus, what is needed is a new and improved system and method for handling customer concerns and warranty returns which is capable of resolving these problems in real-time. Furthermore, the new and improved system and method must allow defect data (or revised component specification studies/projects) to be instantly available for all participants in the automotive value chain including design, quality and product engineers, assembly plants, carriers, and suppliers in dispersed locations.

Accordingly, the present invention provides a method and system for resolving a customer concern by taking at least one digital image of the subject matter of the concern and then transmitting the at least one digital image to a remote reviewer for approval to correct the customer concern.

In accordance with one aspect of the present invention, a method for evaluating a customer concern is disclosed. The method includes receiving the concern related to a subject matter from a customer, capturing at least one digital image of the subject matter of the concern, and deciding whether to approve a corrective action for the customer concern based on a review of the at least one digital image. The present invention provides real time review and response to a customer concern. Thus, customer satisfaction is increased and costs for processing customer concerns are reduced.

In accordance with a second aspect of the invention, there is provided a system for processing A system for processing a customer concern, the system comprising:
a service computer having a digital camera assembly in communication therewith for capturing images of the customer concern;
a reviewer computer for receiving the images from the service computer for determining how to address the customer concern; and
a communication network connecting the service computer with the reviewer computer for transmitting customer concern information including the images therebetween.

The invention will now be described further, by way of example, with reference to the accompanying drawings, in which:
Figure 1 is a perspective view of a system for resolving a customer concern, in accordance with the present invention;
Figure 2a is a schematic illustration of a data acquisition unit having a container for housing a digital camera, a scanner and a service computer, in accordance with the present invention;
Figure 2b is a block diagram the scanner and a digital camera interface, in accordance with the present invention;
Figure 3 is a front view of the container having a lid and a base, in accordance with the present invention;
Figure 4 is a rear view of the container, in accordance with the present invention;
Figure 5 is a side view of container, in accordance with the present invention;
Figure 6 is a perspective view of the interior surfaces of the container, in accordance with the present invention;
Figure 7 is a top view of the container with the lid in the open positioned, and further illustrating the service computer positioned within the computer recess portion, in accordance with the present invention;
Figure 8 is a perspective view of the computer screen portion shown in a closed position, in accordance with the present invention;
Figure 9 is a perspective view of the computer screen portion shown in an open position, in accordance with the present invention;
Figure 10 is a top view of the digital camera, shown in accordance with the present invention;
Figure 11 is a front view of the digital camera and the scanner unit, shown in accordance with the present invention;
Figure 12 is a bottom view of the scanner unit, shown in accordance with the present invention;
Figure 13 is a rear view of the digital camera and the scanner unit, shown in accordance with the present invention;
Figure 14 is a right side view of the digital camera and the scanner unit, shown in accordance with the present invention;
Figure 15 is a left side view of the digital camera and the scanner unit, shown in accordance with the present invention;
Figure 16 is a perspective view of an alternative container or docking station for the camera/scanner assembly, in accordance with the present invention;
Figure 17 is a perspective view of the alternative container or docking station for the camera/scanner assembly with the camera/scanner assembly shown in a docked position, in accordance with the present invention;
Figure 18 is a process flow diagram illustrating a use for the system, in accordance with the present invention;
Figure 19a is a perspective view of the claim approval request screen which is displayed on the service computer, in accordance with the present invention; and
Figure 19b is a perspective view of the claim approval request screen which is displayed on the reviewer computer, in accordance with the present invention.

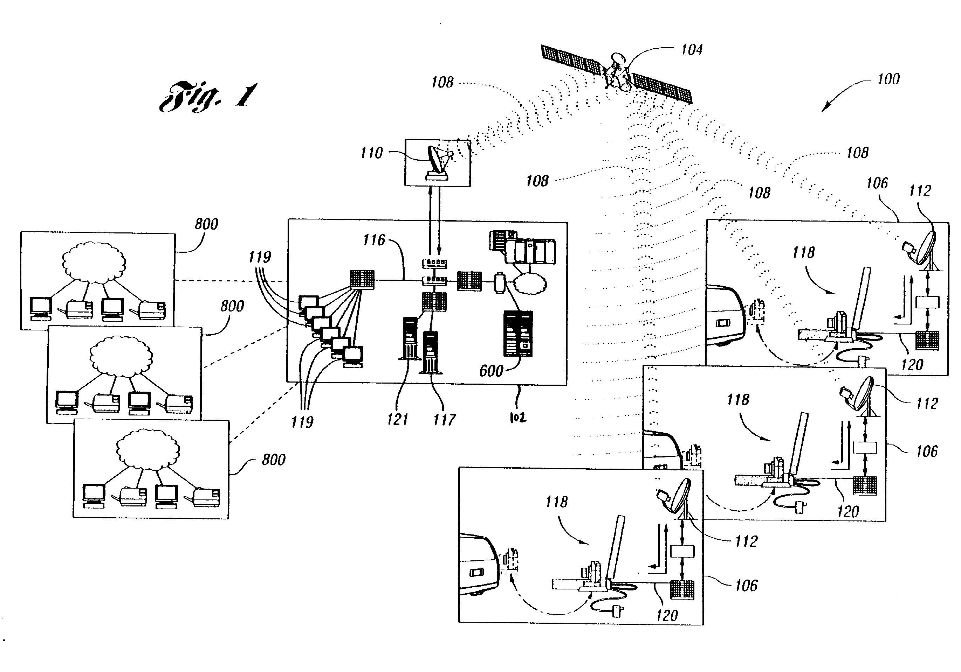

Referring now to Figure 1, a system 100 for resolving a customer concern is illustrated, in accordance with the present invention. System 100 includes a reviewer office 102, a communication satellite 104, and a plurality of service offices 106. Service offices are typically located remotely from the reviewer office 102. A communication path 108 is established between each of the service offices 106 and the reviewer office 102 by a reviewer office antenna 110 located at reviewer office 102 and by a service office antenna 112 located at each of the service offices 106. Such a satellite communication system is well known in the art, and the present invention contemplates use of other communication networks such as plain old telephone lines, fiber optic networks, digital subscriber lines, ISDN lines and the like. A representative satellite network is Ford Motor Company's Fordstar satellite network, but of course other suitable satellite networks may be used.

In an embodiment of the present invention, the reviewer office 102 includes a computer network 116. Computer network 116 is preferably an Ethernet network having a primary server computer 117, and a plurality of client computers 119 connected thereto. An exemplary primary server computer is the PowerEdge 6300 system available through Dell Computer Company of Houston, Texas. The primary server computer 117 manages all the workflow between the reviewer office and the service offices. To insure high system reliability, preferably a backup server computer 121 identical to the primary server computer is available for almost immediate operation when the primary server fails. The client computers are used by reviewers to view and resolve customer concerns. Each client computer 119 is capable of displaying high resolution images, has fast processing speed to quickly process the images, has sufficient random access memory to process the images, has adequate hard drive capacity to store the images and has network connectivity. An exemplary client computer is a Dell Optiplex GX1 MT having a 450 MHz Pentium II processor with 512 kB L2 Cache, 128 MB of EDO RAM, CD-ROM, video card, 10 GB hard drive, floppy drive, Ethernet network card, monitor and operating system. The Dell Optiplex is available through Dell Computer Company of Houston, Texas.

Computer network 116 connects primary server computer 117 and client computers 119 to reviewer antenna 110 for receiving communication from the service offices 106 via the satellite 104.

A data acquisition unit 118 is located at each service office 106 for acquiring information related to the customer concern. Data acquisition unit 118 is connected to service office antenna 112 via a communication network 120 such as an Ethernet network. Communication network 120 is comprised of a plain old telephone line, fiber optic cable, coax cable, or the like.

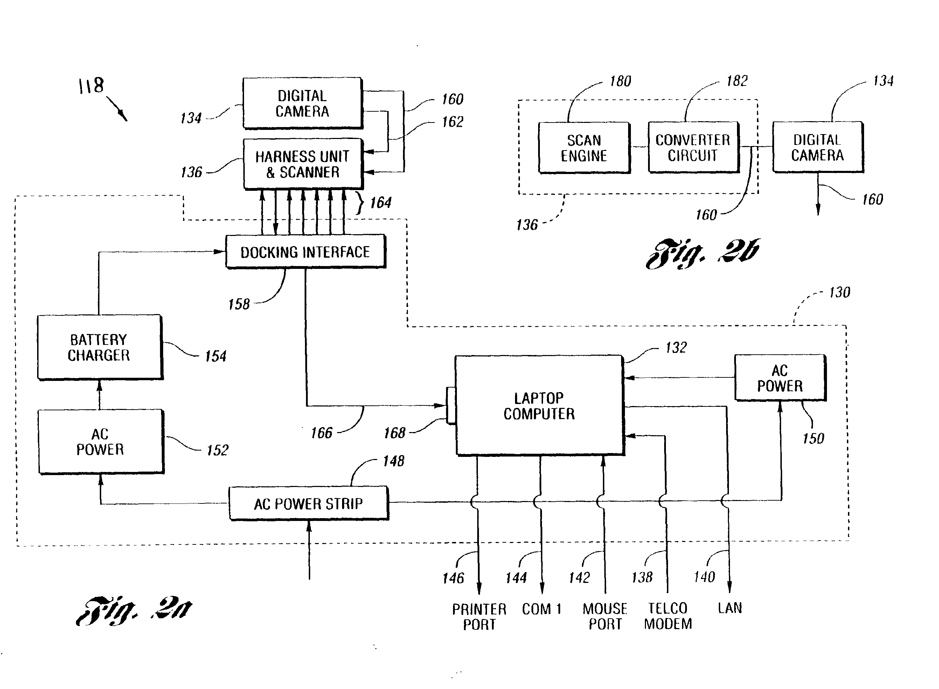

Data acquisition unit 118 is further illustrated schematically in Figure 2a, in accordance with the present invention. Data acquisition unit 118 includes a container 130 which houses a service computer 132, a digital camera 134 and a scanner 136. Preferably, service computer 132 is a laptop having suitable computing power in a relatively small package size for being easily received into container 130. An exemplary service computer is the Dell Latitude Cpi266XT having a 13.3 inch screen, 128 MB EDO RAM, CD-ROM, modem, hard drive, network card, and operating system. The Dell Latitude Cpi266XT is available through Dell Computer Company of Houston, Texas. Additionally, service computer 132 includes a modem port 138, a LAN port 140, a mouse port 142, a COM 1 serial port 144, and a printer port 146. Modem port 138 allows computer 132 to connect to a plain old telephone network for transmitting data via the Internet. Alternatively, LAN port 140 allows computer 132 to connect to a network such as an Ethernet network which is in turn connected to a wide area network such as the Internet via a series of fiber optic cables or satellite links. Mouse port 142 allows a computer mouse to be connected to computer 132 overriding the mouse typically packaged with the service computer. COM 1 serial port 144 enables additional accessories which require communication with service computer 132 to be attached thereto. Printer port 146 allows service computer 132 to output data to a printer.

Digital camera 134 is, preferably, a Kodak DC 265 available through Kodak Inc. of Rochester, New York. Other digital cameras having the same or similar operational characteristics such as resolution and data output and input ports may also be used. The digital camera 134 and scanner unit 136 will be described in further detail below.

Container 130 also includes an a.c. power strip 148 which provides electrical power to computer power supply 150 and to camera power supply 152. Computer power supply 150 is capable of connecting to standard wall outlet power (110-120 volts at 60 Hertz). Further, computer power supply 150 provides suitable operating voltages and electrical current to operate service computer 132. Camera power supply 152 provides electrical power to a battery charging circuit 154. As with computer power supply 150, camera power supply 152 is capable of receiving a supply voltage of between 110 to 120 volts at 60 Hertz. Battery charging circuit 154 is in electrical communication with camera power supply 152, and provides electrical charging energy to rechargeable camera batteries (not shown) housed within the scanner unit 136. The battery charging circuit 154 is built by conventional means, as well known in the art, and is available through Cell-Con Company of Coatsville, PA.

More specifically, a docking station 158 having a plurality of electrical terminals 164 communicates battery charging energy to scanner unit 136 which in turn communicates the battery charging energy to the camera batteries (not shown) housed therein. The batteries are available through Sanyo Corporation of Japan. Of course other batteries having similar electrical power output characteristics may be used.

With continuing reference to Figure 2a, digital camera 134 is further illustrated having a data transmission cable 160 and a power cable 162, in accordance with the present invention. Data transmission cable 160 communicates digital image information to scanner unit 136 and then through terminals 164 to docking station 158. The digital image information is then transmitted from docking station 158 through a universal serial bus cable (USB) 166 to a USB port 168 on service computer 132.

With reference to Figure 2b, a block diagram of the scanner unit 136 is illustrated, in accordance with the present invention. Scanner unit 136 includes a scan engine 180 and a converter circuit 182. The scan engine 180 is typical bar code scanner/reader, model number SE-1233HP-I101A, available through Symbol Technologies. Scan engine 180 is in communication with converter circuit 182 and upon scanning a bar code outputs a transistor-transistor logic (TTL) signal thereto. Converter circuit 182, built by conventional means, translates the TTL signal into an RS-232 format as well known in the art. An output signal in RS-232 format is then communicated through data transmission cable 160 to the digital camera 134. Software residing in the camera 134 receives the scanned bar code data and "watermarks" the digital images stored in the camera's memory. Watermarking the images associates the bar code with the digital image taken. In this way the present invention insures that the object or subject matter of the digital image may be identified.

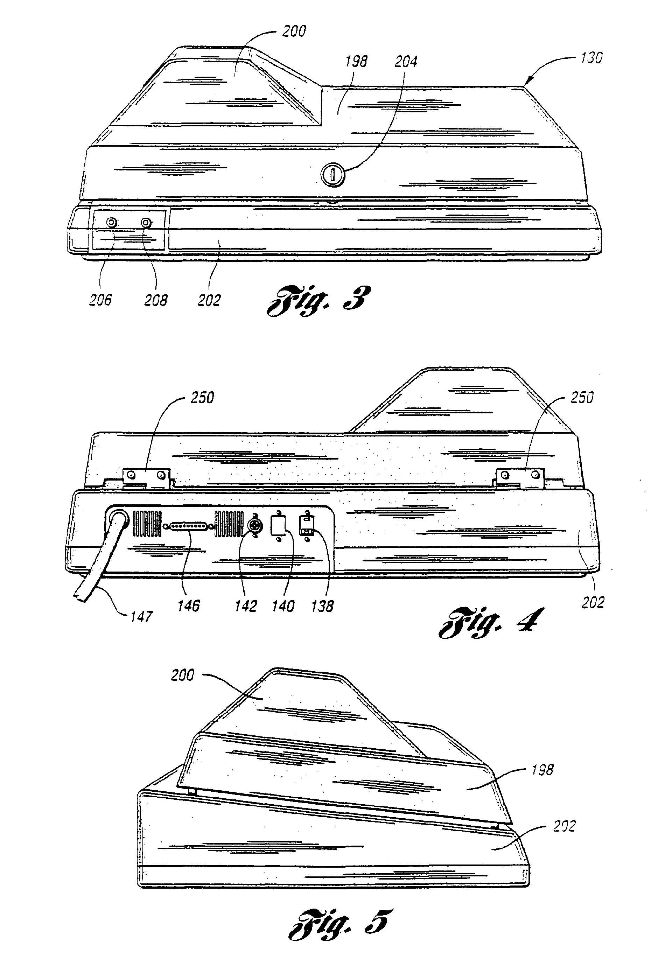

Referring now to Figures 3 through 5, a preferred embodiment of container 130 is illustrated, in accordance with the present invention. Figure 3 is a front perspective view of container 130 having a lid 198 and base 202. Lid 198 includes a raised portion 200 for accommodating the height of digital camera 134. Further, lid 198 includes a lock 204 which releasably secures the lid to the base. Base 202 further includes a power indicator light 206 and a charge indicator light 208. Power indicator light 206 indicates that container 130 is connected to electrical supply power. Charge indicator light 208 indicates that the digital camera 134 is currently charging.

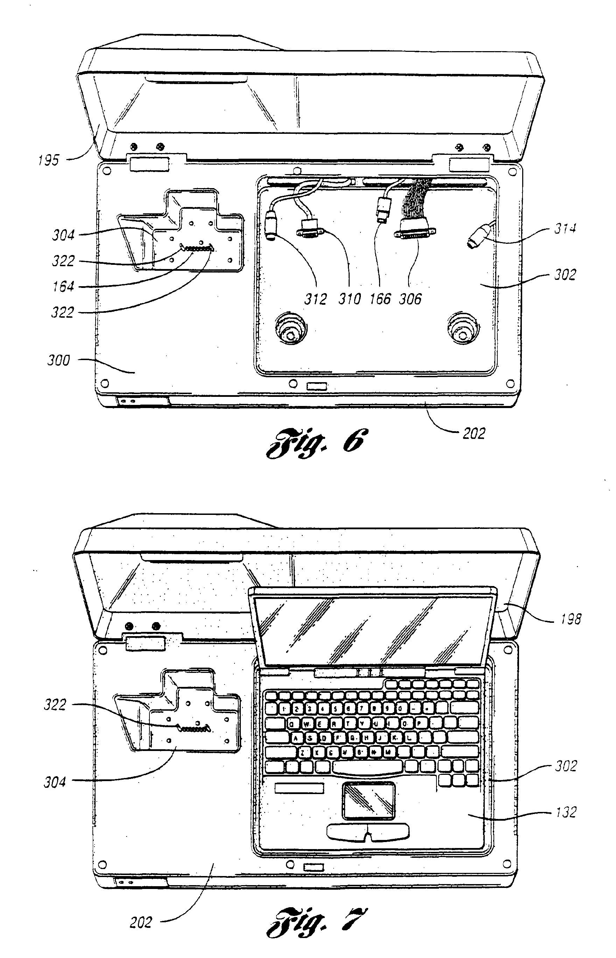

Referring now to Figure 4, a rear view of container 130 is illustrated, in accordance with the present invention. A pair of hinges 250 are provided for pivotably securing lid 198 to external base 202. On a rear panel 252 of base 202 there is provided an external modem port 138 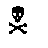 , a LAN port 140 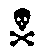 , an external mouse port 142 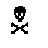 , an external printer port 146 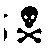 , and an external power cable 147 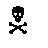 .

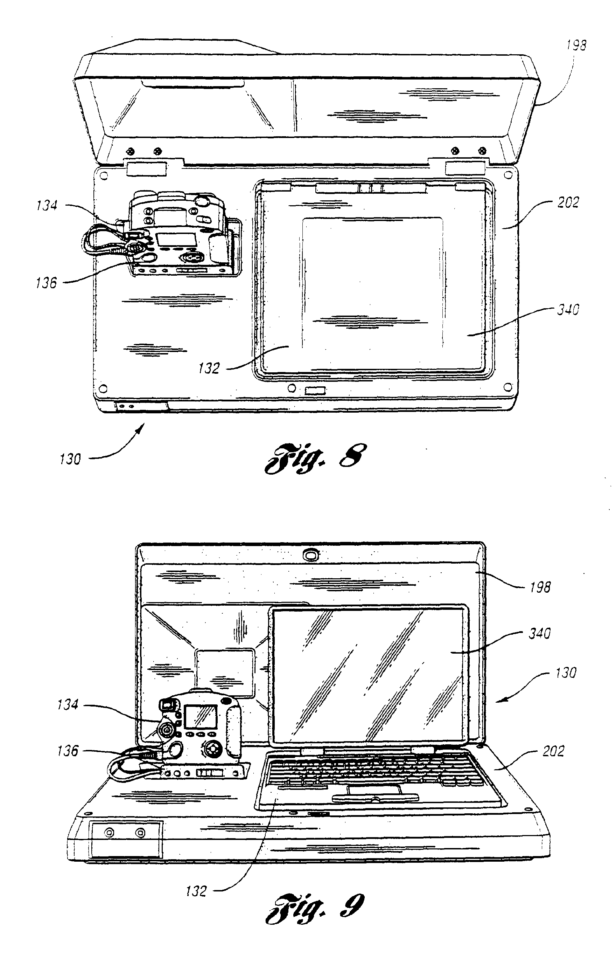

Figure 5 illustrates a side view of container 130, in accordance with the present invention. Lid 198 is shown in a closed position with respect to the base 202.

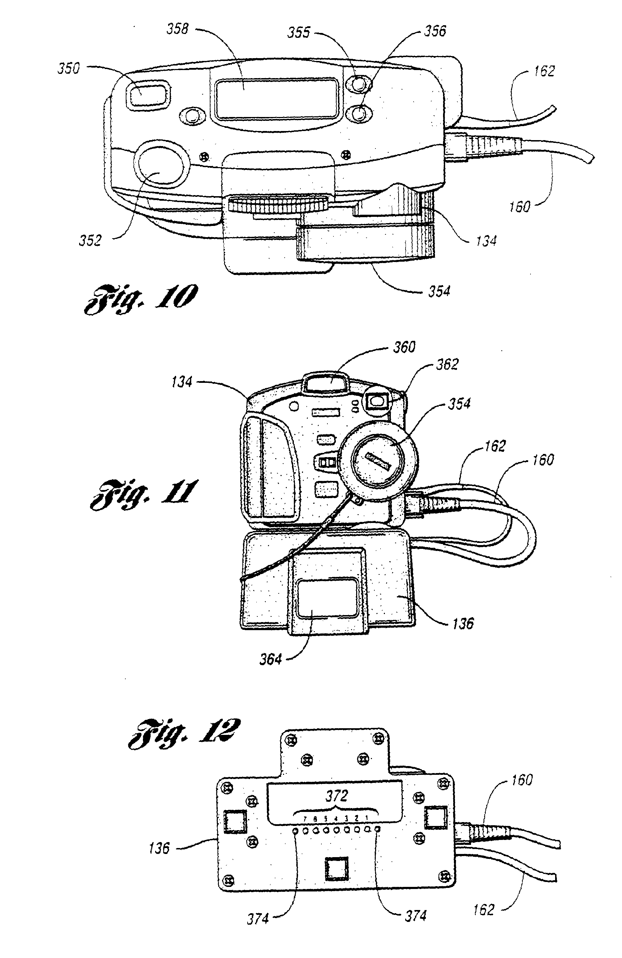

Referring now to Figure 6, the interior surfaces of container 130 are illustrated, in accordance with the present invention. Base 202 has a top surface 300 which includes a computer recessed portion 302 and a digital camera recessed portion 304. Computer recessed portion 302 is generally sized and shaped to receive service computer 132. Computer recessed portion 302 further includes a plurality of apertures for receiving data cables to connect to service computer 132 disposed therein. A parallel printer cable 30 connects printer port 146 to the external printer port 146 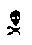 on the back panel of base 202. A LAN cable 319 connects the LAN port 140 to the external LAN port 140 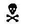 on the rear panel of base 202. A COM 1 cable 310 connects the COM 1 port 144 to the external COM 1 port 144 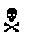 on the rear panel of base 202. A computer mouse cable 312 connects the mouse port 142 on computer 132 to the external mouse port 142 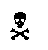 on base 202. USB cable 166 is in communication with USB port 168 on computer 132 at one end, and to four terminals of terminals 164. Terminals 164 contact conductive surfaces disposed on a bottom surface of scanner unit 136, as will be illustrated in subsequent figures.

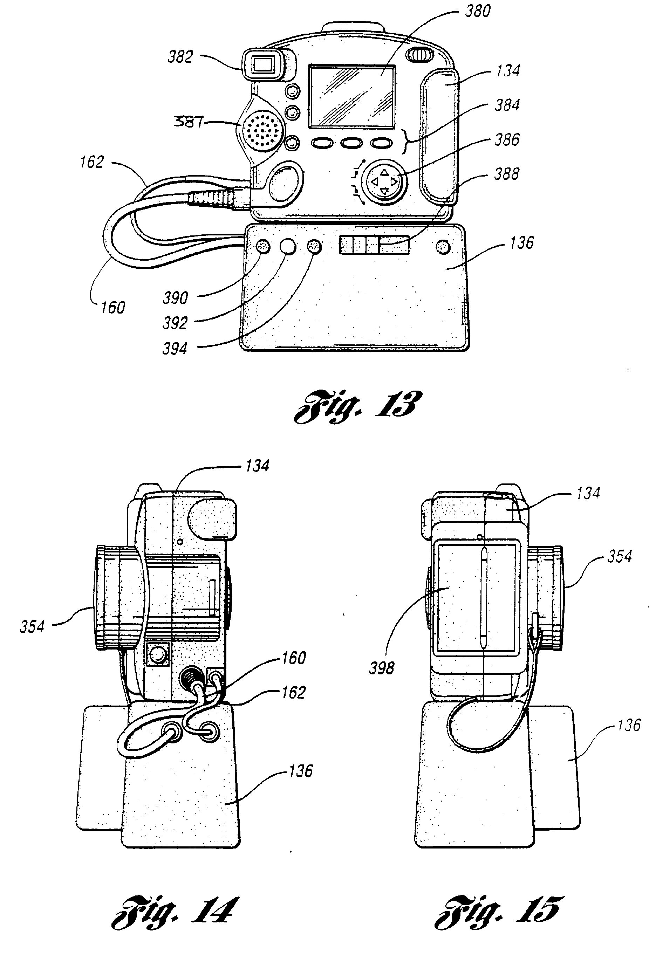

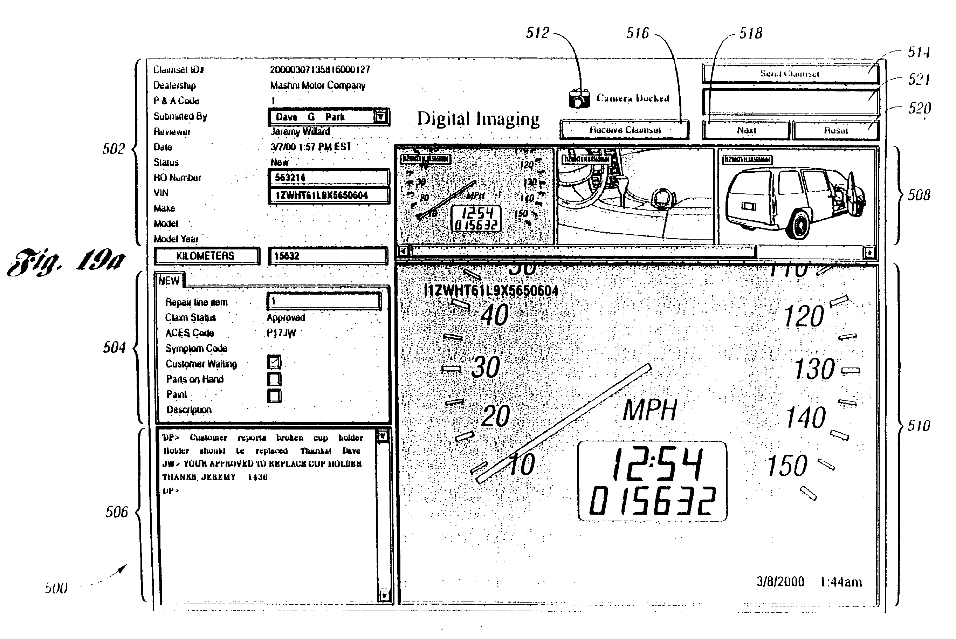

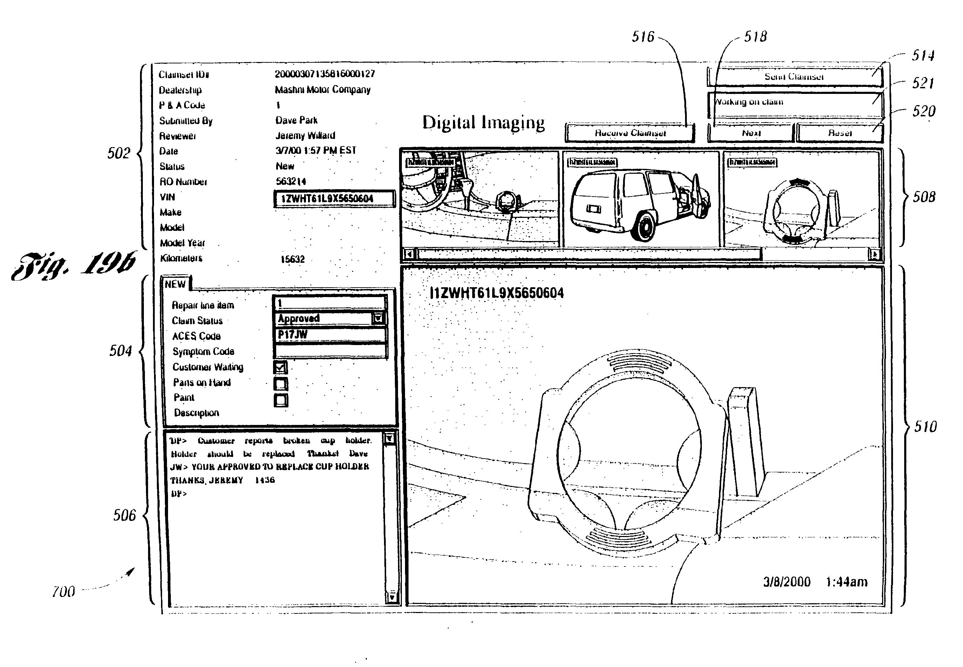

Referring now to Figure 7, a top view of container 130 is illustrated with lid 198 in an open position, and further illustrating service computer 132 positioned within computer recess portion 302. As will be further illustrated hereinafter digital camera recessed portion 304 is sized and has a shape which matches the digital camera 134 and scanner unit 136 assembly allowing the assembly to be seated therein. Digital camera recessed portion 304 further includes a pair of guide pins 322 which are received in a pair of apertures (shown in Figure 12) disposed in the bottom surface of scanner unit 136. Guide pins 322 operate to position the bottom surface and the conductive contacts (shown in Figure 12) disposed thereon onto terminals 164. When digital camera 134 and scanner unit 136 are positioned onto terminals 164 digital image data may be transferred from digital camera 134 to the service computer 132. Additionally, when digital camera 134 and scanner unit 136 are positioned within the digital camera recessed portion 304 three terminals of terminals 164 provide charging energy to the rechargeable batteries disposed within scanner unit 136.

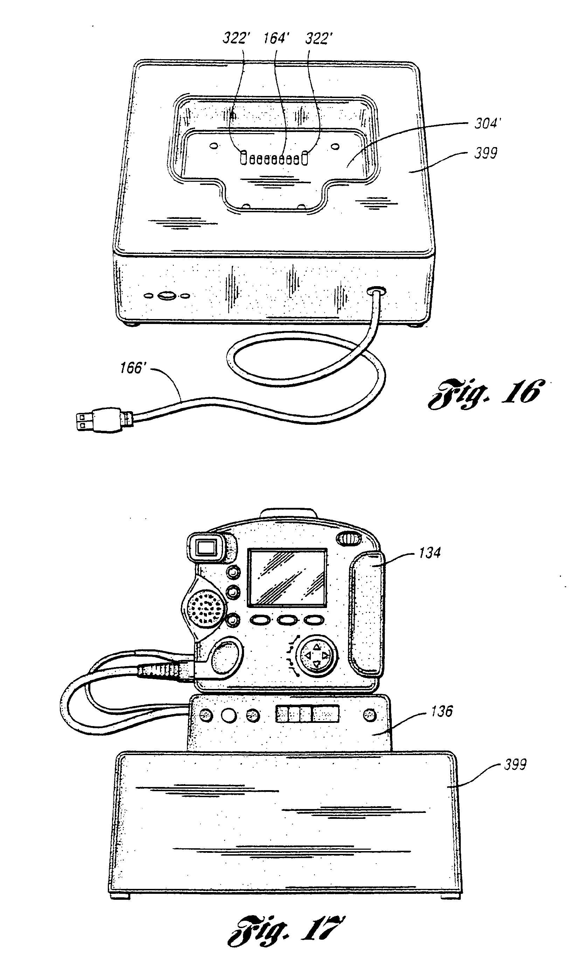

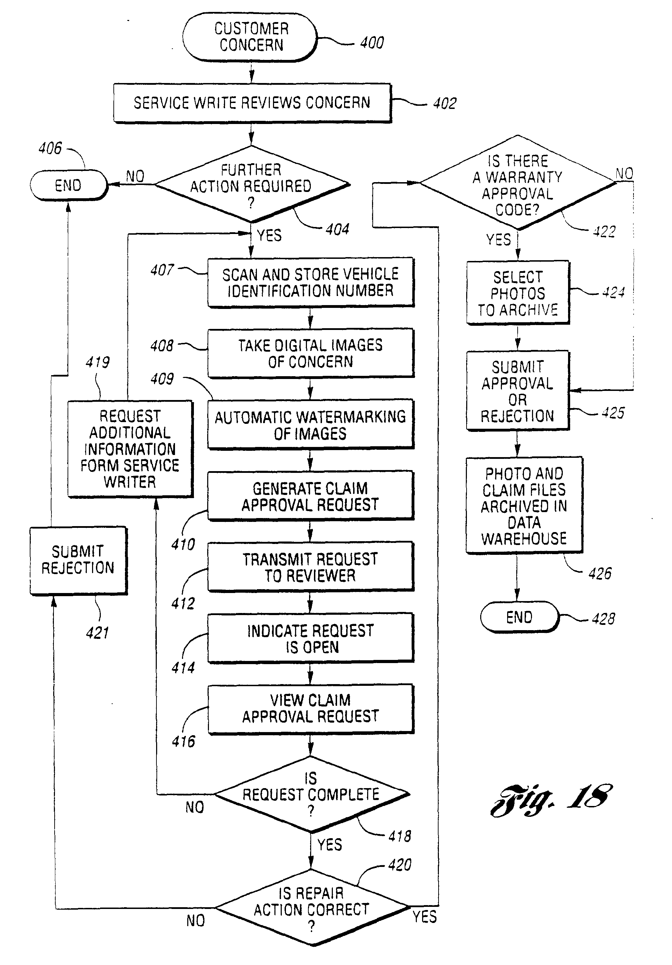

Referring now to Figures 8 and 9, service computer 132, digital camera 134 and scanner unit 136 are shown positioned within container 130. As illustrated in Figure 8, computer screen portion 340 is shown in a closed position. In this position, lid 198 may be closed and secured to base 202 using lock 204.

Figure 9 illustrates screen 340 in an open position, in accordance with the present invention. In this position, service computer 132 may be powered on placing the system in a fully operational mode.

Referring now to Figures 10-15, a more detailed view of digital camera 134 with scanner unit 136 mounted thereto is illustrated, in accordance with the present invention. A top view of digital camera 134 is shown in Figure 10. On the top surface of digital camera 134 there is disposed a power button 350 for energizing digital camera 134. Further, an image capture button 352 is also disposed on the top surface of digital camera 134 for acquiring images through camera lens 354. Select button 355 and scroll button 356 are used to actuate and select various camera functions for operating camera 134. The top surface of digital camera 134 further includes a liquid crystal display 358 which communicates camera operation parameters to the camera user.

Referring now to Figure 11, a front view of digital camera 134 and scanner unit 136 is illustrated, in accordance with the present invention. A front surface of digital camera 134 includes a flash 360 for illuminating the subject matter to be photographed. A view finder lens 362 allows the camera user to position the digital camera to compose the appropriate view of the subject matter to be photographed. Scanner unit 136 includes a scanner engine which is capable of decoding a typical bar code disposed on the subject matter to be photographed for identifying same.

Referring now to Figure 12, a bottom view of the scanner unit 136 is illustrated, in accordance with the present invention. A pair of apertures 374 are disposed on the bottom surface of scanner unit 136 for receiving guide pins 322 projecting up from digital camera recess portion 304. Guide pins 322 and associated apertures 374 ensure that digital camera 134 and scanner unit 136 are properly positioned within the digital camera recess portion 304 so that contacts 372 are positioned onto and contact terminals 164.

Referring now to Figures 13-15, the rear and side views of digital camera 134 and scanner unit 136 are illustrated, in accordance with the present invention. Referring to Figure 13, a view finder screen 380 is disposed on a rear surface of digital camera 134 for locating and directing the digital camera toward the subject matter to be photographed. Alternatively, a viewing lens 382 may be used to direct the camera. A plurality of user keys 384 are also disposed on the rear surface of camera 134 for selecting various camera functions. A multifunction button 386 further provides selection of camera operating modes.

Digital camera 134 is further provided with an internal microphone 387 for capturing sounds related to the customer concern. Of course an external microphone configured to communicate with camera 134 may also be used. Thus, the present invention allows digital information such as digital image data and digital sound data to be stored and transmitted to the remote claim reviewer.

Screw 388 secures the scanner unit 136 to a bottom surface of camera 134. Power indicator 390 is disposed on a rear surface of scanner unit 136 and indicates whether power is being provided to the scanner unit. Charge indicator 392 also disposed on the rear surface indicates whether the camera is being charged. Finally, charge level indicator 394 indicates whether camera 134 is fully charged.

An alternative embodiment for container 130 and docking station 158 is illustrated in Figures 16 and 17, in accordance with the present invention. Stand-alone docking station 399 is configured to hold the camera 134 and scanner unit 136 assembly. As described above with respect to terminals 164 a similar set of terminals 164' are disposed within recess portion 304'. Terminals 164' are in communication with data communication cable 166' which is a universal serial bus (USB) cable. The USB cable communicates data from the camera 134 to the service computer 132. A pair a guide posts 322' are also disposed within recess portion 304' to guide the scanner unit 136 onto terminals 164'. In all other respects the stand-alone docking station 399 functions in a similar manner as container 130 and docking station 158 described above.

Referring now to Figure 18, a process for using system 100 is illustrated, in accordance with the present invention. Although, the process described below is directed toward resolving a customer's concern regarding an automotive vehicle it will be appreciated that system 100 can be used to resolve issues in other fields. For example, in the fresh produce industry system 100 can be used to connect remote buyers with sellers. System 100 would enable the buyers of produce to view the product and negotiate a price before they made a purchase.

With respect to the automotive industry, the process is initiated by a vehicle owner entering a vehicle dealership, and describing a concern to a dealership employee or service writer, as represented by block 400. At block 402, the service writer reviews the customer's concern to determine what action is required. If the service writer determines that no further action is required the process ends, as represented by blocks 404 and 406. However, if the service writer believes further action is warranted the process moves forward, as represented by block 404.

With continuing reference to Figure 18, after the service writer determines that the customer's concern requires further action the service writer initiates documentation of the customer's concern. The service writer positively identifies the vehicle by first scanning in the vehicle identification number (VIN), as represented by block 407. The VIN is stored in the camera's memory. At block 408, digital images are taken of the customer's vehicle. Preferably, for identification purposes at least three digital images of the customer's vehicle are captured. At least one of these images is of the vehicle odometer reading. Another digital image is a rear three-quarter view perspective of the customer's vehicle including the vehicle license plate. Finally, at least one image is taken of the actual vehicle problem which is the subject matter of the customer's concern. At block 409, the VIN is automatically "watermarked" onto the images to insure that each image is associated with the vehicle currently being processed.

After the service writer has captured the digital images set forth above the service writer generates a claim approval request form. A detailed description of the claim approval request form will be described in the following text and shown in subsequent figures. Once the claim approval request form has been generated, as represented by block 410 the digital images and the request form is transmitted to a remote claim reviewer, as represented by block 412. At block 414, the remote claim reviewer is alerted as to whether the request is a currently open request or a new request. Remote claim reviewer accesses the claim approval request by viewing a claim reviewer screen, as represented by block 416.

Claim reviewer first must determine whether the claim approval request is complete, as represented by block 418. If the claim approval request is not complete the claim reviewer returns the claim approval request to the service writer, and requests the missing information, as represented by block 419. If the claim approval request is complete the claim reviewer determines whether the repair action suggested by the service writer is correct, as represented by block 420. If the action requested by the service writer is not correct the claim reviewer responds to the service writer by rejecting the requested repair, as represented by block 421. If the claim reviewer believes that the repair action is correct the claim reviewer determines whether the item is covered under the vehicle warranty, as represented by block 422. If the claim reviewer determines that the repair is covered under the vehicle warranty a warranty approval code is obtained, as represented by block 422. At block 424, the reviewer selects the digital images which best depict the subject matter of the repair. At block 425, the claim approval request is submitted to obtain the required funds to make the corrective action. However, if the repair is not covered by the vehicle warranty or is not a result of a manufacturing defect the repair is rejected and the service writer is notified accordingly, as represented by block 422 and 425. The images and claim file are then stored in a data warehouse where they can be retrieved by all participants in the automotive value chain including design, quality and product engineers, assembly plants, carriers, and suppliers in dispersed locations, as represented by block 426. The process is now complete, as represented by block 428.

In a preferred embodiment of the present invention, system 100 is accessible by an automotive engineering community responsible for designing the company's products. System 100, for example, is connected to a data warehouse 600 (shown in Figure 1). Data warehouse 600 is accessed by the automotive engineering community to determine whether a corrective action such as a product redesign is needed. The engineering community views the digital images attached to the claim approval request files and are able to quickly determine what the problem is and generate a fix. The present invention contemplates that other company divisions can be immediately notified of a defect in the product and a corrective action can be initiated. For example, the company's product factories 800 (see Figure 1) can be notified and take suitable action to correct the product defect. The present invention significantly reduces the amount of time to obtain product defect feedback and thus allows corrective actions to take place much sooner which ultimately reduces warranty costs and increases customer satisfaction.

Referring now to Figure 19a, a claim approval request screen 500 which is displayed on service computer 132 is illustrated, in accordance with the present invention. The claim approval request screen 500 includes a claim request information portion 502 which provides information regarding the customer concern such as, a claim set ID number so that the claim can be tracked, the dealership name where the claim is being originated, a P&A code, service writer's name, reviewer's name, the date and time of creation of the claim approval request, status of the request, an RO number, the vehicle VIN number, the make, the model, the model year are also specified. Additionally, there is provided a field to enter an odometer reading.

With continuing reference to Figure 19a, the claim approval request screen 500 is further illustrated having a status portion 504. Status portion 504 includes a repair line field, claim status field, ACES code field, symptom code field, and an indication as to whether the customer is waiting, whether the parts are on hand, and whether paint is required. A description field is also provided to allow the service writer to provide further details regarding the customer concern to the claim reviewer.

The claim approval request screen further includes a dialog portion 506 where the service writer can carry on a dialog with the remote claim reviewer.

The claim approval request screen further includes a thumbnail image display area 508 for displaying the digital images captured by the service writer. Preferably, all of the pictures are displayed in thumbnail size. An image viewing portion 510 provides a space where the digital images can be enlarged allowing closer scrutiny of the customer's concern.

Other indicators and switches are presented on the claim approval request screen, in accordance with the present invention. For example, the claim approval request screen includes a camera docked indicator 512 which indicates whether the digital camera is positioned in the digital camera recess portion 304. A series of action buttons are provided for manipulation by the service writer. The action buttons include a sending claim set button 514 for transmitting a completed claim approval request and associated digital images, a received claim set indicator 516, a next button 518, and a reset button 520. A "wizard" window 521 is position on the upper right hand side of the claim request approval screen and the claim reviewer screen (described below). Wizard window 521 provides the user of system 100 with step-by-step instruction on how to complete the claim approval process including error notification.

Referring now to Figure 19b, a claim reviewer screen 700 is shown, in accordance with the present invention. Claim reviewer screen 700 has an identical appearance as compared to the claim approval request screen 500. The major difference between the two screens is that the claim reviewer has access to certain fields that the service writer does not. For example, only the claim reviewer may make an entry in the claim status field and the ACES code field. This ensures that data entry errors as well as intentional fraudulent activity is prevented.

Accordingly, it is readily apparent from the above disclosure that the present invention offers many advantages and benefits over the prior art. For example, the present invention reduces the time and cost of resolving a customer concern. Moreover, the present invention increases customer satisfaction by resolving customer concerns in near real time.

## Claims

1. A method for processing a customer concern, the method comprising:
receiving the customer concern related to a product;
capturing at least one digital image of the product;
sending the at least one digital image of the product to a reviewer;
viewing the at least one digital image;
determining how to address the customer concern for the product; and
submitting one of an approval and a rejection for the customer concern for the product.

2. A method as claimed in claim 1, wherein the customer concern is regarding a manufacturing defect in a product.

3. A method as claimed in claim 1, further comprising acquiring a concern identification indicia which is indicative of the product.

4. A method as claimed in claim 1, further comprising watermarking the concern identification indicia onto the at least one digital image.

5. A method as claimed in claim 1, wherein receiving a customer concern further comprises entering data regarding the customer concern into a computer.

6. A method as claimed in claim 5, wherein entering data further comprises entering data into a computerized concern form.

7. A method as claimed in claim 6, further comprising associating at least one digital image with the computerized concern form.

8. A method as claimed in claim 1, wherein capturing further comprises transferring the at least one digital image from a digital camera to a computer.

9. A method as claimed in claim 1, further comprising transmitting the at least one digital image over a communication network to a remote location for viewing by the reviewer.

10. A system for processing a customer concern, the system comprising:
a service computer having a digital camera assembly in communication therewith for capturing images of the customer concern;
a reviewer computer for receiving the images from the service computer for determining how to address the customer concern; and
a communication network connecting the service computer with the reviewer computer for transmitting customer concern information including the images therebetween.

11. A system as claimed in claim 15 further comprises a scanner in communication with the digital camera assembly for acquiring at least one identifying indicia.

12. A system as claimed in claim 11, wherein the at least one identifying information is a vehicle identification number.

13. A system as claimed in claim 11, wherein the at least one identifying information is watermarked onto the images.

14. A system as claimed in claim 10, further comprises a housing having a base and a base cover.

15. A system as claimed in claim 14, wherein the base further comprises a first recess portion for receiving a computer.

16. A system as claimed in claim 14, wherein the base further comprises a second recess portion for receiving the digital camera assembly.

17. A system as claimed in claim 16, wherein the second recess portion further comprises a plurality of terminals which contact to a plurality of camera assembly terminals.

18. A system as claimed in claim 17, wherein the plurality of terminals further comprises a first set of terminals in communication with a first set of camera terminals for charging the camera.

19. A system as claimed in claim 17, wherein the plurality of terminals further comprises a second set of terminals in communication with a second set of camera terminals for transmitting data between the camera and computer.

20. A system as claimed in claim 14, wherein the housing further comprises a power supply for providing electrical power to the digital camera.

21. A system as claimed in claim 14, wherein the housing further comprises a battery charger for charging a battery included in the digital camera for providing electrical power to same.

22. A system for processing a customer concern, the system comprising:
a service computer for receiving data indicative of the customer concern;
a digital camera in communication with the service computer for capturing at least one image of a subject matter of the customer concern;
a scanner for acquiring an identifying indicia of the subject matter of the customer concern;
a reviewer computer for receiving the at least one image from the service computer to determine how to correct the customer concern; and
a communication network connecting the service computer with the reviewer computer for transmitting customer concern information including the at least one image therebetween.
